(19) Europäisches Patentamt / European Patent Office / Office européen des brevets

(11) **EP 2 490 477 B1**

(12) **EUROPEAN PATENT SPECIFICATION**

(45) Date of publication and mention
of the grant of the patent:
**23.10.2019 Bulletin 2019/43**

(21) Application number: **10791601.7**

(22) Date of filing: **29.06.2010**

(51) Int Cl.:
*H04W 12/06* *(2009.01)*      *H04W 72/12* *(2009.01)*
*H04W 28/24* *(2009.01)*

(86) International application number:
**PCT/CN2010/074713**

(87) International publication number:
**WO 2010/149095 (29.12.2010 Gazette 2010/52)**

(54) **METHOD AND DEVICE FOR ASSIGNING AUTHENTICATION OF A HIGH SPEED UPLINK PACKET ACCESS (HSUPA) NETWORK**

VERFAHREN UND VORRICHTUNG ZUR ZUWEISUNG DER AUTHENTIFIZIERUNG EINES NETZWERKS MIT HOCHGESCHWINDIGKEITS-AUFWÄRTSSTRECKENPAKETZUGANG (HSUPA)

PROCÉDÉ ET DISPOSITIF POUR ATTRIBUER UNE AUTHENTIFICATION D'UN RÉSEAU D'ACCÈS PAR PAQUET DE LIAISON MONTANTE HAUTE VITESSE (HSUPA)

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.12.2009 CN 200910215780**

(43) Date of publication of application:
**22.08.2012 Bulletin 2012/34**

(73) Proprietor: **ZTE Corporation**
**Shenzhen, Guangdong 518057 (CN)**

(72) Inventor: **LI, Jun**
**Shenzhen**
**Guangdong 518057 (CN)**

(74) Representative: **Savi, Massimiliano et al**
**NOTARBARTOLO & GERVASI S.p.A.**
**Corso di Porta Vittoria 9**
**20122 Milano (IT)**

(56) References cited:
CN-A- 101 035 085      CN-A- 101 146 269
CN-A- 101 742 564      US-A1- 2007 025 300
US-A1- 2007 183 359

- NEC: "Content of E-AGCH", 3GPP DRAFT; R2-050504, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Scottsdale, USA; 20050210, 10 February 2005 (2005-02-10), XP050127751, [retrieved on 2005-02-10]
- "3rd Generation Partnership Project; Technical Specification Group Radio Access Network; Medium Access Control (MAC) protocol specification (Release 9)", 3GPP STANDARD; 3GPP TS 25.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 28 December 2009 (2009-12-28), pages 1-191, XP050401577, [retrieved on 2009-12-28]
- 'Technical Specification Group Radio Access Network 3GPP TS 25.309 V 6.6.0: FDD Enhanced Uplink' 3GPP March 2006, pages 20 - 25, XP050367622

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention belongs to the field of a communication technology, and more especially, relates to a method and a system for assigning a serving grant of a High Speed Uplink Packet Access (HSUPA) network.

Background of the Related Art

After the Wideband Code Division Multiple Access (WCDMA) network introduces the downlink High Speed Downlink Packet Access (HSDPA) technology in the R5 protocol, the capacity of the WCDMA network is largely enhanced. While another problem corresponding to HSDPA is also put on the agenda at the same time, that is, the improvement of the uplink data service rate.

HSUPA introduces a high uplink Enhanced Dedicated Channel (E-DCH), and increases other relevant channels. A HSUPA function entity, i.e., MAC-e is placed in a Node B to accelerate a response rate, and a plurality of core and key techniques are adopted, which comprise: a Hybrid Automatic Repeat Request (Hybrid-ARQ, HARQ) technique; a rapid transmission technique based on scheduling; adopting a shorter transmission time interval of TTI=2ms; and a multi-code technique.

By means of the above techniques, the data service rate of the uplink Packet Service (PS) can be up to 5.76Mbps, so that the rate bottleneck of the development of the WCDMA uplink service is overcome.

Delay is the time for a user to acquire a service. The service delay affects the user's experience. For a HSUPA network system, different services have different Quality of Service (QoS) requirements, and for the service having a high requirement on the delay, the HSUPA network should reduce the processing delay to ensure its performance. There are two factors affecting the service delay as follows:

(1) bit error affecting the delay; and
(2) HSUPA scheduler affecting the delay.

Bit errors will result in retransmissions, thus affecting the response time for a data packet in the entire network; a Serving Grant (SG) assigned by the HSUPA scheduler to a User Equipment (UE) will also affect the delay, and the higher the assigned SG, the bigger a data packet sent within the same period of time, and the shorter the delay; on the contrary, the longer the delay. The present invention mainly studies the effect of the scheduler assigning a SG on the delay without consideration of the effect of retransmissions due to the bit errors. The SG refers to a power ratio of the uplink Enhanced Dedicated Channel (E-DCH) to the uplink Dedicated Physical Control Channel (DPCCH), and reflects the ability of the UE to send data packets.

In the existing technology, when processing burst services in a HSUPA network, such as clicking on a web page and a Packet Internet Grope (ping) packet, or gaming, the HSUPA scheduler schedules and assigns a SG to UE according to a size of a data packet required to be sent by the UE during the burst service. Since it takes some time for the scheduler to assign the corresponding SG from staring up, and it also takes a certain time for a scheduling command (Absolute grant/Relative grant) to be in force from the scheduler issuing the scheduling command, the delay of scheduling response is resulted in, that is, a condition of the delay assignment of the SG appears. Therefore, according to the existing scheme for assigning the SG, the system delay will have a sudden increase when the UE processes the burst service, thus resulting in delay jitter when the UE has a SG from not having a SG. As a result, it is necessary to develop a new scheme for assigning the SG, so as to try to avoid the delay jitter of UE in the HSUPA network during the burst service.

The document NEC: "Content of E-AGCH", 3GPP Draft; R2-050504, Scottsdale, 2005 discloses the content of E-AGCH.

Summary of the Invention

The technical problem to be solved by the present invention is to provide a method and a system for assigning a SG of a HSUPA network, for defects in the existing technology, so as to avoid delay jitter of UE in the HSUPA network efficiently when a burst service occurs.

In order to address the aforementioned technical problem, the present invention provides a method according to claim 1 and a system according to claim 6. Further improvements and embodiments are provided in the dependent claims.

Also provided is a method for assigning a SG of a HSUPA network, comprising:

step one: a HSUPA scheduler assigning a SG to UE according to a service requirement of the UE; and

step two: the UE maintaining the SG until the service requirement of the UE changes, and then returning to step one.

According to the aforementioned method, the UE always maintains the SG assigned by the HSUPA scheduler to it, during the service requirement of the UE remaining unchanged; and then during this period of time, the UE can directly use the SG for processing, when there is a service to be processed, and delay assignment of the SG no longer exists. Therefore, the delay jitter of UE is avoided efficiently when the burst service is processed.

The step two further comprises: the UE using the SG only if there is a service needed to be processed.

Since the UE actually uses the maintained SG only if there is a service needed to be processed, that is, the UE needs to send data, the uplink load can be effectively saved compared with the scheme of always using the SG, thus avoiding a waste of uplink load resources. The HSUPA scheduler can use the saved load to assign a SG to other UE. In the following contents of this text, the load refers to the uplink load.

As a preferable scheme of the method according to the present invention, the step of assigning a SG to the UE comprises:

assigning the SG using an available load Cav of a cell to be scheduled during a scheduling cycle, wherein, the available load Cav of the cell to be scheduled is calculated using the following formula:

$$Cav = RTWPt\arg et - RTWPmea + \sum_{i=1}^{n} Li$$

wherein, RTWPtarget is a target uplink Received Total Wideband Power (RTWP) of the cell to be scheduled, i.e., the target load of the cell to be scheduled; RTWPmea is an actually measured RTWP of the cell to be scheduled, i.e., the actual load of the cell to be scheduled; and n is a number of the UE of the cell to be scheduled; and

wherein, Li=(Loadi_sg-Loadi_pre)*A, and Loadi_sg is an uplink load corresponding to the SG assigned to the UE within one scheduling cycle; Loadi_pre is an average load of the UE within one scheduling cycle; and A is a weighting coefficient, of which a value range is (0,1].

The scheduling cycle of the present invention refers to a time interval between two starting-ups of the HSUPA scheduler.

In the aforementioned preferable scheme, the weighting coefficient A is adopted to adjust Loadi_sg-Loadi_pre, because Loadi_sg-Loadi_pre is used as a saved load of some UE for use in scheduling of other UE in the scheme, and if Loadi_sg-Loadi_pre is not weighted, a number of the UE to which the SG is assigned may be too much within the scheduling cycle, thus resulting in instability of the system. In particular, if the cell to be scheduled is in a high load state at this time, the burst data of the services being superimposed together may cause a high instantaneous interference on the system, and affect the system stability.

Therefore, as a more preferable scheme, the higher the uplink load of the cell to be scheduled is, the lower the value of A is; conversely, the lower the uplink load of the cell to be scheduled is, the higher the value of A is.

As a preferable scheme of the method according to the present invention, Loadi_sg adopts a load corresponding to a SG assigned to the UE during the last scheduling cycle; and Loadi_pre adopts the average load of the UE during the last scheduling cycle.

As a preferable scheme of the method according to the present invention, Loadi_pre is calculated as follows: during each Transmit Time Interval (TTI) of the last scheduling cycle, calculating the actual uplink load of the UE, and then averaging the actual uplink loads calculated during various TTIs to obtain Loadi_pre.

Also provided is a system for assigning a SG of a HSUPA network, comprising a HSUPA scheduler and UE, wherein,

the HSUPA scheduler is configured to assign a SG to the UE according to a service requirement of the UE; and

the UE is configured to always maintain the SG assigned by the HSUPA scheduler when the service requirement does not change; and to use the maintained SG only if there is a service needed to be processed.

As a preferable scheme of the system according to the present invention, the system of the present invention further comprises an available load calculation module, which is configured to calculate an available load Cav of a cell to be scheduled within one scheduling cycle according to the following formula:

$$Cav = RTWPt\arg et - RTWPmea + \sum_{i=1}^{n} Li$$

wherein, RTWPtarget is a target RTWP of the cell to be scheduled, RTWPmea is an actually measured RTWP of the cell to be scheduled; and n refers to a number of the UE of the cell to be scheduled; and

wherein, Li=(Loadi_sg-Loadi_pre)*A, and Loadi_sg is an uplink load corresponding to the SG assigned to the UE within one scheduling cycle; Loadi_pre is an average load of the UE within one scheduling cycle; and A is a weighting coefficient, of which a value range is (0,1].

The higher the uplink load of the cell to be scheduled is, the lower the value of A is; conversely, the lower the uplink load of the cell to be scheduled is, the higher the value of A is.

The available load calculation module calculates the available load Cav of the cell to be scheduled within one scheduling cycle, and then the HSUPA scheduler can assign a SG to the UE according to the available load Cav.

As a preferable scheme of the system according to the present invention, Loadi_sg adopts a load corresponding to a SG assigned to the UE during the last scheduling cycle; and Loadi_pre adopts an average load of the UE during the last scheduling cycle.

The beneficial effects of the present invention are:

With the system and the method of the present invention, the HSUPA scheduler assigns a SG to UE according to a service requirement of the UE, that is a size of a amount of data needed to be sent by the UE; the UE always maintains the SG before the service requirement of the UE changes, and the UE uses the SG only if there is data needed to be sent; and therefore, on the one hand, delay jitter can be avoided during a burst service; on the other hand, a waste of the uplink load can be tried to be avoided. The present invention has positive meaning for improving the QoS of the HSUPA network and enhancing degree of satisfaction of a user, and the technical scheme of the present invention is easy to implement, has a low cost, and is convenient for promotion.

Brief Description of Drawings

FIG. 1 is a model of a ping packet service;

FIG. 2 is a diagram for a HSUPA scheduler to assign a SG according to a TEBS reported by UE;

FIG. 3 is a diagram of reducing a delay of a ping packet using a SG mode according to the present invention;

FIG. 4 is a diagram of a time relationship of a HSUPA scheduler when there are two UE ping packets;

FIG. 5 is a flow chart of calculating an available load and assigning a SG according to the available load;

FIG. 6 is a flow chart of a preferable embodiment of a method according to the present invention; and

FIG. 7 is a structural diagram of a preferable embodiment of an apparatus according to the present invention.

Preferred Embodiments of the Present Invention

The present invention will be illustrated in further detail in combination with accompanying drawings and specific embodiments hereinafter.

A response speed of a network is often measured by ping packets; and therefore the present invention will be specifically described by example of a ping packet service hereinafter.

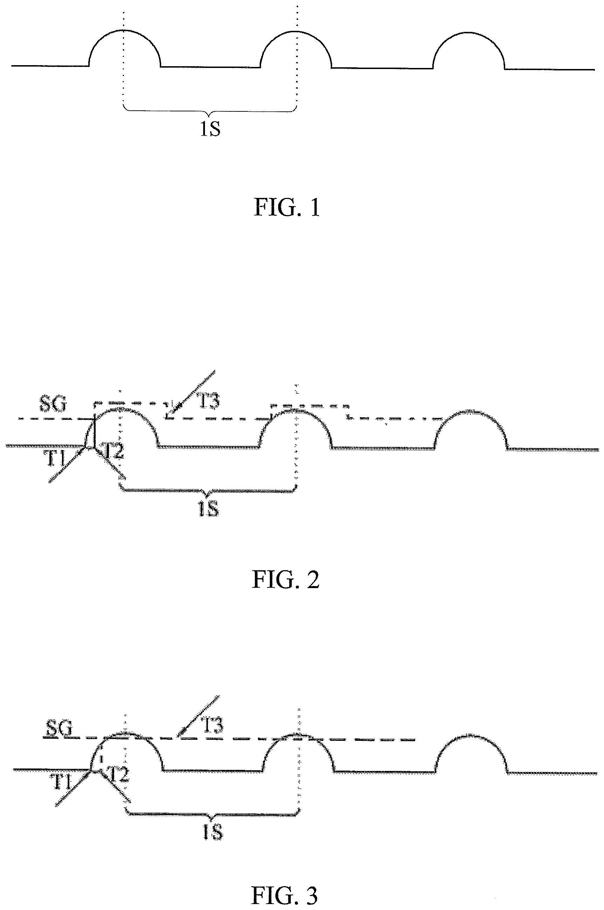

A model of a ping packet service is shown in FIG. 1. As shown in FIG. 1, the ping packet is a large packet sent for 1s. In a HSUPA network, UE reflects a requirement of the UE to send packets by reporting a Total E-DCH Buffer Status (i.e., TEBS). If a HSUPA scheduler schedules and assigns a SG according to a size of a data packet required to be sent by the UE during a burst service, that is, a requirement for the packet occurs, since it takes some time for the scheduler to assign the corresponding SG from staring up, it also takes some time for a scheduling command (Absolute grant/Relative grant) to be in force from the scheduler issuing the scheduling command, the delay of scheduling response is resulted in, as shown in FIG. 2.

It can be seen from FIG. 2 that, delay assignment of the SG will appear when the HSUPA scheduler assigns the SG according to the reported TEBS. At T1, the UE reports the TEBS, but the HSUPA scheduler really responses to this request at T2, then the HSUPA scheduler maintains the SG until T3, and only when considering that there is no requirement from the UE to send the packet, the HSUPA scheduler reduces the SG to a minimum SG, which is a SG needed to send a MAC-d PDU, wherein, the PDU refers to a protocol data unit. Just because the HSUPA scheduler needs to response according to the TEBS reported by the UE, a increase in the system delay is results in, and the correspondingly increased system delay is T2-T1.

It can be known from the above analysis that, if the SG is assigned according to the requirement of the UE, delay jitter will occur when the UE has a SG from not having a SG, thus resulting in the delay jitter of the ping packet.

In order to solve the aforementioned problem in the existing technology, the scheme of the present invention is that the HSUPA scheduler assigns SG to UE according to a requirement of the UE, i.e., a size of a data packet required to be sent by the UE; the UE maintains the SG until the requirement of the UE changes, and then the HSUPA scheduler adjusts the SG of the UE, and afterwards, the UE maintains the adjusted SG until the requirement of the UE changes again.

FIG. 3 is a diagram of reducing a delay of a ping packet using a SG mode according to the present invention. As shown in FIG. 3, since the SG is reserved for the UE when there is a ping packet, the UE can send the data packet at the rate corresponding to the SG when there is a data packet needed to be sent, thus reducing the scheduling delay of the HSUPA scheduler, and ensuring the stability of the delay of the ping packet.

If the UE maintains a high SG, the HSUPA scheduler does not need assignment of the SG to response the requirement according to the TEBS when the UE has a packet needed to be sent at TI. However, if the SG maintained by the UE is always in a state of being used, the SG assigned to the UE will occupy an available uplink load of a HSUPA cell, thus resulting in a waste of uplink load resources. Since uplink is an interference limited system, assuming that a uplink target load is 0.75, if the occupied load for assigning an SG to the UE is 0.15 under a certain reference E-DCH Transport Format Combination (E-TFC) and Power offset (PO), the uplink can only support five UEs, that is, the sixth UE cannot acquire a scheduling opportunity, which is unacceptable for the HSUPA network system. Based on the characteristic of the ping packet service, in the embodiment according to the present invention, the UE uses the SG only if there is a data packet to be sent, rather than always using the maintained SG. That is, after the HSUPA scheduler assigns an appropriate SG according to the TEBS and HAPPYBIT reported by the UE, the UE maintains the SG before the service requirement changes, and the UE side uses the SG only if transmitting data, and will not use the SG if there is no data to be sent.

For example, in the ping packet service, time for processing the burst service may be only 30ms or so, and there are 970ms during which the HSUPA scheduler assigns the SG, but it is not used really. Therefore, the HSUPA scheduler can use the saved part of load to assign an appropriate SG to other UE when performing a schedule, so as to increase the uplink capacity.

When the actual service requirement of the UE changes so that the HSUPA scheduler needs to re-assign a SG, the HSUPA scheduler re-assigns a SG to the UE, i.e., adjusting the SG of the UE; and then the UE maintains the adjusted SG before the HSUPA scheduler adjusts the SG of the UE the next time; and during the period of time, the adjusted SG is directly used to send data if there is a service to be processed.

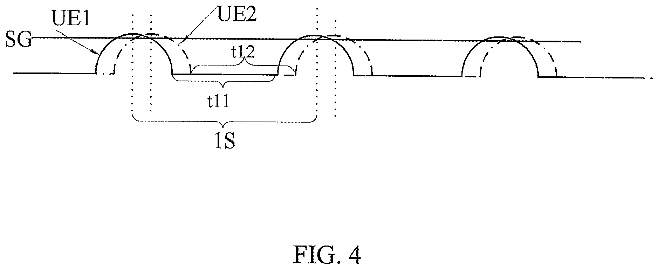

FIG. 4 is a diagram of a time relationship of a scheduler when there are two UE ping packets. As shown, the HSUPA scheduler assigns a SG to a first UE1 during the time of t11, but no uplink data packet is sent within the time of t11, that is, an interference of the UE1 to the uplink is 0 within the time of t11; and for a second UE UE2, it is also same condition within the time of t22.

Assuming that within a scheduling cycle, an interference corresponding to the uplink is Loadi_sg when the SG assigned by the HSUPA scheduler to some UE is used, and the embodiment according to the present invention takes Loadi_sg of the last cycle as a load expected to be assigned to the UE within the present scheduling cycle; and assuming that within a scheduling cycle, an average influence of the UE to an uplink load is Loadi_pre, and the embodiment according to the present invention takes Loadi_pre of the last cycle as a load actually used by the UE within the present scheduling cycle, within a scheduling cycle, for the UE, the load Li which can be saved by the scheduler (that is a saved uplink load compared with the scheme of the UE always using the SG) is:

Li = (Loadi_sg-Loadi_pre)*A, wherein, A is a weighting coefficient, and a value range of which is (0,1], and the higher the uplink load of a HSUPA cell where the UE is located is, the smaller the value of A is; conversely, the lower the uplink load of the HSUPA cell where the UE is located is, the larger the value of A is. A specific value of A can be obtained by way of simulation.

The reason why the value of A is different as the load of the cell is different, is involving the system stability. If a compensation coefficient is high under a high load, the burst service data being superimposed together will cause a high instantaneous interference on the system, and therefore the value of A should be low in a high load state.

The so-called saved load in the present invention refers to a load saved by the scheme of the UE maintaining the assigned SG and using the SG only if there is a service to be processed, compared with the case of always using the assigned SG. The saved SG is used to be assigned to other UE, which is beneficial to the capacity of the entire cell.

Before some cell is scheduled, an available load Cav of the cell within a scheduling cycle is calculated according to the following formula, and then the HSUPA scheduler assigns a corresponding SG according to the available load Cav in combination with the requirement of each UE:

$$Cav = RTWPt\,arg\,et - RTWPmea + \sum_{i-1}^{n} Li$$

,

wherein, RTWPtarget refers to a target RTWP of the cell to be scheduled, RTWPmea refers to an actually measured RTWP of the cell to be scheduled; and n refers to a number of the UE of the cell.

In the embodiment according to the present invention, Loadi_sg adopts a load corresponding to the SG assigned to the UE within the last scheduling cycle; and Loadi_pre adopts an average load of the UE within the last scheduling cycle. In the embodiment according to the present invention, firstly, actual loads during various TTIs in the last scheduling cycle is calculated according to the PO and Signal to Interference Ratio (SIR) reported by the UE, and then the loads are averaged to obtain Loadi_pre. While for Loadi_sg, E-TFC corresponding to the SG in the last scheduling cycle is used to calculate PO, and then Loadi_sg is obtained according to PO.

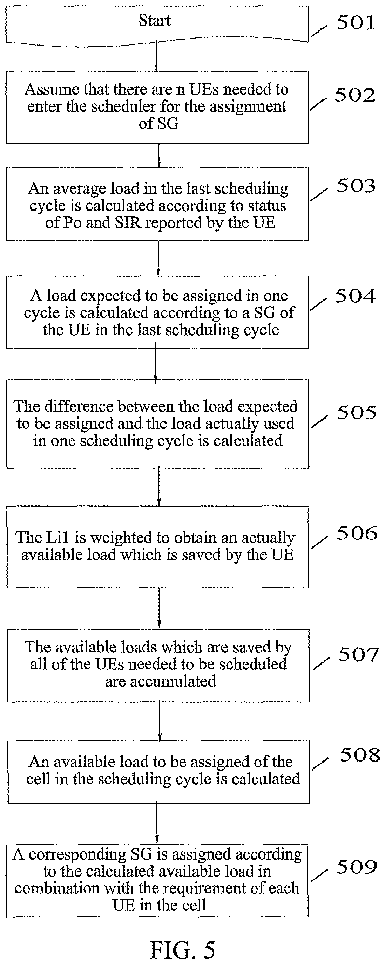

FIG. 5 is a flow chart of calculating an available load and assigning a SG according to the available load. As shown, the process of calculating an available load and assigning a SG according to the available load specifically comprises the following steps.

In step 501, the process starts.

In step 502, assume that there are n UEs needed to enter a scheduler for the assignment of a SG.

In step 503, an average load Loadi_pre in the last scheduling cycle is calculated according to status of PO and SIR reported by the UE, and is used as a load actually used by the UE in the present scheduling cycle.

In step 504, a load Loadi_sg corresponding to a SG of the UE in the last scheduling cycle is calculated according to the SG, and is used as a load expected to be assigned to the UE in the present scheduling cycle.

In step 505, the difference between the load expected to be assigned to the UE and the load actually used by the UE in the present scheduling cycle is calculated, i.e., Li1=Loadi_sg-Loadi_pre.

In step 506, the Lil is weighted to obtain an actually available load which is saved by the UE,Li=A*Li1.

In step 507, the available loads which are saved by all of the UEs needed to be scheduled are accumulated.

In step 508, an available load of the cell in the present scheduling cycle is calculated:

$$Cav = RTWPt\,arg\,et - RTWPmea + \sum_{i-1}^{n} Li$$

.

In step 509, the HSUPA scheduler assigns a corresponding SG according to the available load Cav in combination with the requirement of each UE.

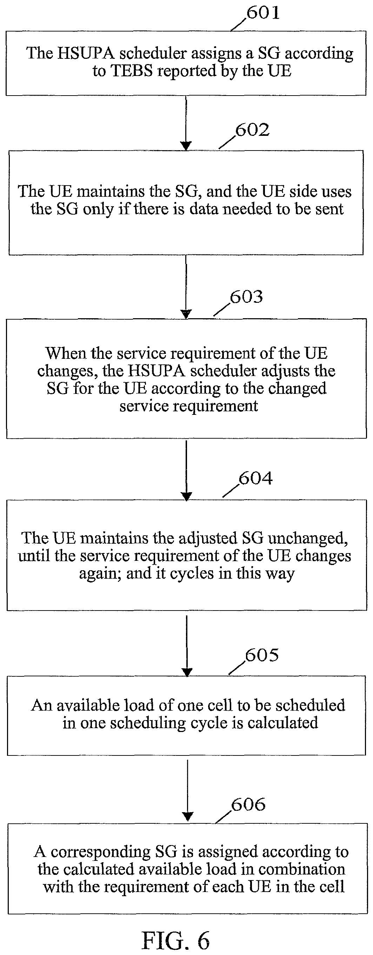

FIG. 6 is a flow chart of a preferable embodiment of a method according to the present invention. As shown, the method according to the present invention specifically comprises the following steps.

In step 601, the HSUPA scheduler assigns a SG according to TEBS reported by the UE.

In step 602, the UE maintains the SG before the service requirement of the UE changes, and the UE side uses the SG only if there is data to be sent, and will not use the SG if there is no data to be sent.

In step 603, when the service requirement of the UE changes, the HSUPA scheduler adjusts the SG for the UE according to the changed service requirement, i.e., re-assigning a SG to the UE.

In step 604, the UE maintains the adjusted SG, and re-adjusts the SG of the UE until the service requirement of the UE changes again, that is, until the HSUPA scheduler re-adjusts the SG for the UE; and cycles in this way, for the UE, between the two changes of service requirement, the UE always maintains one SG, and when there is a service to be processed, the SG is directly used for processing, without leading to delay assignment of the SG.

In step 605, an available load Cav of a cell to be scheduled in a scheduling cycle is calculated according to the following formula:

$$Cav = RTWPt\,arg\,et - RTWPmea + \sum_{i-1}^{n} Li$$

,

wherein, RTWPtarget refers to a target RTWP of the cell to be scheduled, RTWPmea refers to an actually measured RTWP of the cell to be scheduled; and n refers to a number of the UE of the cell to be scheduled; and

Li = (Loadi_sg-Loadi_pre)*A, wherein, Loadi_sg refers to an uplink load corresponding to a SG assigned to the UE within a scheduling cycle; Loadi_pre refers to an average load of the UE within a scheduling cycle; and A is a weighting coefficient, of which a value range is (0,1].

In step 606, the HSUPA scheduler assigns a corresponding SG according to the available load Cav in combination with the requirement of each UE.

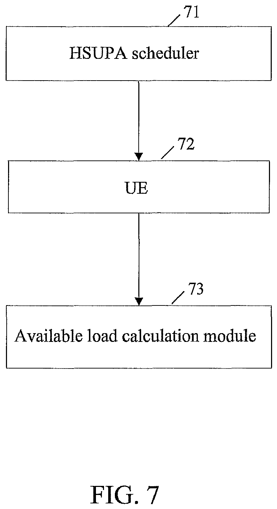

FIG. 7 is a structural diagram of a preferable embodiment of a system according to the present invention. As shown, the system 70 for assigning a SG of a HSUPA network according to the present invention comprises a HSUPA scheduler 71, UE 72, and an available load calculation module 73.

Wherein, the HSUPA scheduler 71 assigns a SG to the UE 72 according to a service requirement of the UE 72.

The UE 72 always maintains the SG assigned by the HSUPA scheduler 71 when the service requirement does not change, and the UE 72 uses the maintained SG only if there is a service to be processed.

The available load calculation module 73 calculates an available load Cav of a cell to be scheduled in a scheduling cycle according to the following formula:

$$Cav = RTWPt \arg et - RTWPmea + \sum_{i=1}^{N} Li$$

wherein, RTWPtarget refers to a target load of the cell to be scheduled, RTWPmea refers to an actually measured load of the cell to be scheduled; and n refers to a number of the UE of the cell to be scheduled; and

Li = (Loadi_sg-Loadi_pre)*A, wherein, Loadi_sg refers to an uplink load corresponding to a SG assigned to the UE within a scheduling cycle, and in the present embodiment, Loadi_sg adopts a load corresponding to a SG assigned to the UE during the last scheduling cycle; Loadi_pre refers to an average load of the UE within a scheduling cycle, and in the present embodiment, Loadi_pre adopts an average load of the UE during the last scheduling cycle; and wherein A is a weighting coefficient, of which a value range is (0,1]. Specifically, the higher the uplink load of the cell to be scheduled is, the smaller the value of A is; conversely, the lower the uplink load of the cell to be scheduled is, the larger the value of A is.

The HSUPA scheduler 71 can more reasonably assign a SG to the UE of the cell to be scheduled, according to the calculated available load Cav.

The aforementioned specific embodiments illustrate the purposes, technical schemes and beneficial effects of the present invention in further detail. It should be noted that, the above description is only the specific embodiments of the present invention, and those skilled in the field can make various changes and variations to the present invention without departing from the scope of the present invention.

Industrial Applicability

With the system and the method of the present invention, the HSUPA scheduler assigns a SG to UE according to a service requirement of the UE, that is a size of a amount of data needed to be sent by the UE; the UE always maintains the SG before the service requirement of the UE changes, and the UE uses the SG only if there is data needed to be sent; and therefore, on the one hand, delay jitter can be avoided during a burst service; on the other hand, a waste of the uplink load can be tried to be avoided. The present invention has positive meaning for improving the QoS of the HSUPA network and enhancing degree of satisfaction of a user, and the technical scheme of the present invention is easy to implement, has a low cost, and is convenient for promotion.

**Claims**

1. A method for assigning a serving grant of a High Speed Uplink Packet Access, HSUPA, network, comprising:

   step one: a HSUPA scheduler assigning a serving grant to user equipment according to a service requirement of the user equipment; and
   step two: the user equipment maintaining the serving grant until the service requirement of the user equipment changes, and then returning to step one;
   wherein,
   step two further comprises: the user equipment using the serving grant only if there is a service needed to be processed.

2. The method for assigning a serving grant of a HSUPA network of claim 1, wherein, the step of assigning a serving grant to the user equipment comprises:
   Assigning (509, 606) the serving grant by using an available load Cav of a cell to be scheduled during one scheduling cycle, wherein the available load Cav of the cell to be scheduled is calculated (508, 605) by using a following formula:

$$Cav = RTWPt \arg et - RTWPmea + \sum_{i=1}^{n} Li$$

wherein, RTWPtarget is a target uplink Received Total Wideband Power, RTWP, of the cell to be scheduled; RTWPmea is an actually measured uplink RTWP of the cell to be scheduled; and n is the number of the user equipment of the cell to be scheduled; and

wherein, Li=(Loadi_sg-Loadi_pre)*A, and Loadi_sg is an uplink load corresponding to the serving grant assigned to the user equipment within one scheduling cycle; Loadi_pre is an average load of the user equipment within one scheduling cycle; and A is a weighting coefficient, of which a value range is (0,1].

3. The method for assigning a serving grant of a HSUPA network of claim 2, wherein,
the higher the uplink load of the cell to be scheduled is, the lower a value of A is; conversely, the lower the uplink load of the cell to be scheduled is, the higher the value of A is.

4. The method for assigning a serving grant of a HSUPA network of claim 2 or 3, wherein,
the Loadi_sg is a load corresponding to the serving grant assigned to the user equipment during last scheduling cycle; and the Loadi_pre is an average load of the user equipment during the last scheduling cycle.

5. The method for assigning a serving grant of a HSUPA network of claim 4, wherein, the Loadi_pre is calculated as follows:
during each transmit time interval of the last scheduling cycle, calculating an actual uplink load of the user equipment, and then averaging the actual uplink loads calculated during various transmit time intervals to obtain the Loadi_pre.

6. A system for assigning a serving grant of a High Speed Uplink Packet Access, HSUPA, network, comprising a HSUPA scheduler (71) and user equipment (72), wherein,
the HSUPA scheduler is configured to assign a serving grant to the user equipment according to a service requirement of the user equipment; and
the user equipment is configured to maintain the serving grant assigned by the HSUPA scheduler all the time when the service requirement does not change; and to use the maintained serving grant only if there is a service needed to be processed.

7. The system for assigning a serving grant of a HSUPA network of claim 6, further comprising an available load calculation module (73), wherein,
the available load calculation module is configured to calculate an available load Cav of a cell to be scheduled within one scheduling cycle according to a following formula:

$$Cav = RTWPt \arg et - RTWPmea + \sum_{i=1}^{n} Li$$

wherein, RTWPtarget is a target uplink Received Total Wideband Power, RTWP, of the cell to be scheduled, RTWPmea is an actually measured uplink RTWP of the cell to be scheduled; and n refers to the number of the user equipment of the cell to be scheduled; and
wherein, Li=(Loadi_sg-Loadi_pre)*A, and Loadi_sg is an uplink load corresponding to the serving grant assigned to the user equipment within one scheduling cycle; Loadi_pre is an average load of the user equipment within one scheduling cycle; and A is a weighting coefficient, of which a value range is (0,1].

8. The system for assigning a serving grant of a HSUPA network of claim 7, wherein,
the higher the uplink load of the cell to be scheduled is, the lower a value of A is; conversely, the lower the uplink load of the cell to be scheduled is, the higher the value of A is.

9. The system for assigning a serving grant of a HSUPA network of claim 7 or 8, wherein,
the Loadi_sg is a load corresponding to the serving grant assigned to the user equipment during last scheduling cycle; and the Loadi_pre is an average load of the user equipment during the last scheduling cycle.

**Patentansprüche**

1. Verfahren zur Zuweisung einer Dienstgenehmigung eines Netzwerks mit Hochgeschwindigkeits-Aufwärtsstreckenpaketzugang (HSUPA), umfassend:

   Schritt eins: ein HSUPA-Ablaufsteuerprogramm sendet eine Dienstgenehmigung an ein Benutzerendgerät entsprechend einer Diensterfordernis des Benutzerendgeräts; und
   Schritt zwei: das Benutzerendgerät hält die Dienstgenehmigung aufrecht, bis die Diensterfordernis des Benutzerendgeräts sich ändert und kehrt dann zu Schritt eins zurück;
   wobei
   Schritt zwei ferner umfasst: das Benutzerendgerät benutzt die Dienstgenehmigung nur, wenn ein zu verarbeitender Dienst vorliegt.

2. Verfahren zur Zuweisung einer Dienstgenehmigung eines HSUPA-Netzwerks nach Anspruch 1, wobei der Schritt der Zuweisung einer Dienstgenehmigung an das Benutzerendgerät umfasst:
   Zuweisen (509, 606) der Dienstgenehmigung durch Verwenden einer verfügbaren Last-CAV einer während eines Planungskreises einzuplanenden Zelle, wobei die verfügbare Last-CAV der einzuplanenden Zelle unter Verwendung der folgenden Formel berechnet wird (508, 605):

$$Cav = RTWPt\arg et - RTWPmea + \sum_{i=1}^{n} Li$$

   wobei RTWP-Target ein Target-Uplink der empfangenen Gesamt-Breitbandleistung (RTWP) der einzuplanenden Zelle ist; RTWPmea ein aktuell gemessener Uplink-RTWP der einzuplanenden Zelle ist; und n die Anzahl der Benutzerendgeräte der einzuplanenden Zelle ist; und
   wobei Li=(Loadi_sg-Loadi_pre)*A und Loadi_sg eine Uplink-Last ist, die der dem Benutzerendgerät innerhalb eines Planungskreises zugewiesenen Dienstgenehmigung entspricht; Loadi_pre eine durchschnittliche Last des Benutzerendgeräts innerhalb eines Planungskreises ist; und A ein Gewichtungskoeffizient ist, dessen Wertebereich (0,1] ist.

3. Verfahren zur Zuweisung einer Dienstgenehmigung eines HSUPA-Netzwerks nach Anspruch 2, wobei
   je höher die Uplink-Last der einzuplanenden Zelle ist, desto niedriger ist der Wert von A;
   und umgekehrt, je niedriger die Uplink-Last der einzuplanenden Zelle ist, desto höher ist der Wert von A.

4. Verfahren zur Zuweisung einer Dienstgenehmigung eines HSUPA-Netzwerks nach Anspruch 2 oder 3, wobei
   Loadi_sg eine Last ist, die der dem Benutzerendgerät während des letzten Planungskreises zugewiesenen Dienstgenehmigung entspricht; und Loadi_pre eine durchschnittliche Last des Benutzerendgeräts während des letzten Planungskreises ist.

5. Verfahren zur Zuweisung einer Dienstgenehmigung eines HSUPA-Netzwerks nach Anspruch 4, wobei
   Loadi_pre wie folgt berechnet wird:
   während jedes Übertragungszeitintervalls des letzten Planungskreises, Berechnen einer aktuellen Uplink-Last des Benutzerendgeräts und anschließendes Mitteln der während der verschiedenen Übertragungszeitintervalle berechneten aktuellen Uplink-Lasten, um Loadi_pre zu erhalten.

6. System zur Zuweisung einer Dienstgenehmigung eines Netzwerks mit Hochgeschwindigkeits-Aufwärtsstreckenpaketzugang (HSUPA), umfassend ein HSUPA-Ablaufsteuerprogramm (71) und ein Benutzerendgerät (72), wobei
   das HSUPA-Ablaufsteuerprogramm konfiguriert ist, um eine Dienstgenehmigung an ein Benutzerendgerät entsprechend einer Diensterfordernis des Benutzerendgeräts zu senden; und
   das Benutzerendgerät konfiguriert ist, um die von dem HSUPA-Ablaufsteuerprogramm zugewiesene Dienstgenehmigung aufrechtzuerhalten, solange die Diensterfordernis des Benutzerendgeräts sich nicht ändert und die aufrechterhaltene Dienstgenehmigung nur dann zu benutzen, wenn ein zu verarbeitender Dienst vorliegt.

7. System zur Zuweisung einer Dienstgenehmigung eines HSUPA-Netzwerks nach Anspruch 6, ferner umfassend ein Modul zur Berechnung der verfügbaren Last (73), wobei
   das Modul zur Berechnung der verfügbaren Last konfiguriert ist, um eine verfügbare Last-CAV einer innerhalb eines Planungskreises einzuplanenden Zelle gemäß der folgenden Formel zu berechnen:

$$Cav = RTWPt \arg et - RTWPmea + \sum_{i=1}^{n} Li$$

wobei RTWP-Target ein Target-Uplink der empfangenen Gesamt-Breitbandleistung (RTWP) der einzuplanenden Zelle ist; RTWPmea ein aktuell gemessener Uplink-RTWP der einzuplanenden Zelle ist; und n sich auf die Anzahl der Benutzerendgeräte der einzuplanenden Zelle bezieht; und

wobei Li=(Loadi_sg-Loadi_pre)$^*$A und Loadi_sg eine Uplink-Last ist, die der dem Benutzerendgerät innerhalb eines Planungskreises zugewiesenen Dienstgenehmigung entspricht; Loadi_pre eine durchschnittliche Last des Benutzerendgeräts innerhalb eines Planungskreises ist; und A ein Gewichtungskoeffizient ist, dessen Wertebereich (0,1] ist.

8. System zur Zuweisung einer Dienstgenehmigung eines HSUPA-Netzwerks nach Anspruch 7, wobei je höher die Uplink-Last der einzuplanenden Zelle ist, desto niedriger ist der Wert von A; und umgekehrt, je niedriger die Uplink-Last der einzuplanenden Zelle ist, desto höher ist der Wert von A.

9. System zur Zuweisung einer Dienstgenehmigung eines HSUPA-Netzwerks nach Anspruch 7 oder 8, wobei
Loadi_sg eine Last ist, die der dem Benutzerendgerät während des letzten Planungskreises zugewiesenen Dienstgenehmigung entspricht; und Loadi_pre eine durchschnittliche Last des Benutzerendgeräts während des letzten Planungskreises ist.

**Revendications**

1. Procédé d'attribution d'un octroi de desserte d'un réseau d'accès par paquets de liaison montante à haut débit, HSUPA, comprenant :

   étape un : l'attribution par un planificateur HSUPA d'un octroi de desserte à un équipement utilisateur en fonction d'une exigence de service de l'équipement utilisateur ; et
   étape deux : le maintien par l'équipement utilisateur de l'octroi de desserte jusqu'à ce que l'exigence de service de l'équipement utilisateur change, et ensuite le retour à l'étape un ;
   dans lequel,
   l'étape deux comprend en outre : l'utilisation par l'équipement utilisateur de l'octroi de desserte seulement s'il existe un service qui doit être traité.

2. Procédé d'attribution d'un octroi de desserte d'un réseau HSUPA selon la revendication 1, dans lequel, l'étape d'attribution d'un octroi de desserte à l'équipement utilisateur comprend :
l'attribution (509, 606) de l'octroi de desserte en utilisant un Cav de charge disponible d'une cellule à planifier durant un cycle de planification, dans lequel le Cav de charge disponible de la cellule à planifier est calculé (508, 605) en utilisant une formule suivante :

$$Cav = RTWPt \arg et - RTWPmea + \sum_{i=1}^{n} Li$$

dans lequel RTWPtarget est une puissance de large bande totale reçue, RTWP, de liaison montante cible de la cellule à planifier ; RTWPmea est une RTWP de liaison montante réellement mesurée de la cellule à planifier ; et n est le numéro de l'équipement utilisateur de la cellule à planifier ; et
dans lequel, Li= (Loadi_sg-Loadi_pre)$^*$A, et Loadi_sg est une charge de liaison montante correspondant à l'octroi de desserte attribué à l'équipement utilisateur dans un cycle de planification ; Loadi_pre est une charge moyenne de l'équipement utilisateur dans un cycle de planification ; et A est un coefficient de pondération, dont une plage de valeurs est (0,1].

**3.** Procédé d'attribution d'un octroi de desserte d'un réseau HSUPA selon la revendication 2, dans lequel,
plus la charge de liaison montante de la cellule à planifier est élevée, plus une valeur de A est basse ;
inversement, plus la charge de liaison montante de la cellule à planifier est basse, plus la valeur de A est élevée.

**4.** Procédé d'attribution d'un octroi de desserte d'un réseau HSUPA selon la revendication 2 ou 3, dans lequel,
Loadi_sg est une charge correspondant à l'octroi de desserte attribué à l'équipement utilisateur durant un dernier
cycle de planification ; et Loadi_pre est une charge moyenne de l'équipement utilisateur durant le dernier cycle de
planification.

**5.** Procédé d'attribution d'un octroi de desserte d'un réseau HSUPA selon la revendication 4, dans lequel, Loadi_pre
est calculée comme suit :
durant chaque intervalle de temps de transmission du dernier cycle de planification, le calcul d'une charge de liaison
montante réelle de l'équipement utilisateur, et ensuite le calcul d'une moyenne des charges de liaison montante
réelles calculées durant divers intervalles de temps de transmission pour obtenir Loadi_pre.

**6.** Système d'attribution d'un octroi de desserte d'un réseau d'accès par paquets de liaison montante à haut débit,
HSUPA, comprenant un planificateur HSUPA (71) et un équipement utilisateur (72), dans lequel,
le planificateur HSUPA est configuré pour attribuer un octroi de desserte à l'équipement utilisateur en fonction d'une
exigence de service de l'équipement utilisateur ; et
l'équipement utilisateur est configuré pour maintenir l'octroi de desserte attribué par le planificateur HSUPA pendant
tout le temps où l'exigence de service ne change pas ; et pour utiliser l'octroi de desserte maintenu seulement si
un service a besoin d'être traité.

**7.** Système d'attribution d'un octroi de desserte d'un réseau HSUPA selon la revendication 6, comprenant en outre
un module de calcul de charge disponible (73), dans lequel,
le module de calcul de charge disponible est configuré pour calculer une Cav de charge disponible d'une cellule à
planifier dans un cycle de planification en selon une formule suivante :

$$Cav = RTWPt\arg et - RTWPmea + \sum_{i=1}^{n} Li$$

dans lequel RTWPtarget est une puissance de large bande totale reçue, RTWP, de liaison montante cible de
la cellule à planifier, RTWPmea est une RTWP de liaison montante réellement mesurée de la cellule à planifier ;
et n se réfère au numéro de l'équipement utilisateur de la cellule à planifier ; et
dans lequel, Li = (Loadi_sg-Loadi_pre)*A, et Loadi_sg est une charge de liaison montante correspondant à
l'octroi de desserte attribué à l'équipement utilisateur dans un cycle de planification ; Loadi_pre est une charge
moyenne de l'équipement utilisateur dans un cycle de planification ; et A est un coefficient de pondération, dont
une plage de valeurs est (0,1].

**8.** Système d'attribution d'un octroi de desserte d'un réseau HSUPA selon la revendication 7, dans lequel,
plus la charge de liaison montante de la cellule à planifier est élevée, plus une valeur de A est basse ;
inversement, plus la charge de liaison montante de la cellule à planifier est basse, plus la valeur de A est élevée.

**9.** Système d'attribution d'un octroi de desserte d'un réseau HSUPA selon la revendication 7 ou 8, dans lequel,
Loadi_sg est une charge correspondant à l'octroi de desserte attribué à l'équipement utilisateur durant un dernier
cycle de planification ; et Loadi_pre est une charge moyenne de l'équipement utilisateur durant le dernier cycle de
planification.

FIG. 1

FIG. 2

FIG. 3

FIG. 4

```
┌─────────────────────────────────────┐
│              Start                   │  ⟋ 501
└─────────────────────────────────────┘
                  │
                  ▼
┌─────────────────────────────────────┐
│  Assume that there are n UEs needed  │  ⟋ 502
│  to enter the scheduler for the      │
│  assignment of SG                    │
└─────────────────────────────────────┘
                  │
                  ▼
┌─────────────────────────────────────┐
│  An average load in the last         │  ⟋ 503
│  scheduling cycle is calculated      │
│  according to status of Po and SIR   │
│  reported by the UE                  │
└─────────────────────────────────────┘
                  │
                  ▼
┌─────────────────────────────────────┐
│  A load expected to be assigned in   │  ⟋ 504
│  one cycle is calculated according   │
│  to a SG of the UE in the last       │
│  scheduling cycle                    │
└─────────────────────────────────────┘
                  │
                  ▼
┌─────────────────────────────────────┐
│  The difference between the load     │  ⟋ 505
│  expected to be assigned and the     │
│  load actually used in one           │
│  scheduling cycle is calculated      │
└─────────────────────────────────────┘
                  │
                  ▼
┌─────────────────────────────────────┐
│  The Li1 is weighted to obtain an    │  ⟋ 506
│  actually available load which is    │
│  saved by the UE                     │
└─────────────────────────────────────┘
                  │
                  ▼
┌─────────────────────────────────────┐
│  The available loads which are saved │  ⟋ 507
│  by all of the UEs needed to be      │
│  scheduled are accumulated           │
└─────────────────────────────────────┘
                  │
                  ▼
┌─────────────────────────────────────┐
│  An available load to be assigned    │  ⟋ 508
│  of the cell in the scheduling       │
│  cycle is calculated                 │
└─────────────────────────────────────┘
                  │
                  ▼
┌─────────────────────────────────────┐
│  A corresponding SG is assigned      │  ⟋ 509
│  according to the calculated         │
│  available load in combination with  │
│  the requirement of each UE in the   │
│  cell                                │
└─────────────────────────────────────┘
```

FIG. 5

601

The HSUPA scheduler assigns a SG according to TEBS reported by the UE

602

The UE maintains the SG, and the UE side uses the SG only if there is data needed to be sent

603

When the service requirement of the UE changes, the HSUPA scheduler adjusts the SG for the UE according to the changed service requirement

604

The UE maintains the adjusted SG unchanged, until the service requirement of the UE changes again; and it cycles in this way

605

An available load of one cell to be scheduled in one scheduling cycle is calculated

606

A corresponding SG is assigned according to the calculated available load in combination with the requirement of each UE in the cell

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NEC.** Content of E-AGCH. *3GPP Draft; R2-050504,* 2005